(19) Europäisches Patentamt

European Patent Office

Office européen des brevets

(11) **EP 1 312 039 B1**

(12) **EUROPEAN PATENT SPECIFICATION**

(45) Date of publication and mention
of the grant of the patent:
**29.03.2006 Bulletin 2006/13**

(51) Int Cl.:
***G06K 9/00*** *(2006.01)*     ***G06F 17/30*** *(2006.01)*

(21) Application number: **01963349.4**

(22) Date of filing: **24.08.2001**

(86) International application number:
**PCT/IL2001/000797**

(87) International publication number:
**WO 2002/017166 (28.02.2002 Gazette 2002/09)**

(54) **SYSTEM AND METHOD FOR AUTOMATIC PREPARATION AND SEARCHING OF SCANNED DOCUMENTS**

SYSTEM UND VERFAHREN ZUR AUTOMATISCHEN AUFBEREITUNG UND SUCHE VON ABGETASTETEN DOKUMENTEN

SYSTEME ET PROCEDE DE PREPARATION ET DE RECHERCHE AUTOMATIQUES DE DOCUMENTS LUS PAR BALAYAGE

(84) Designated Contracting States:
**AT BE CH CY DE DK ES FI FR GB GR IE IT LI LU MC NL PT SE TR**

(30) Priority: **24.08.2000 US 227512 P**

(43) Date of publication of application:
**21.05.2003 Bulletin 2003/21**

(73) Proprietor: **Olive Software, Inc.
Denver,
Colorado 80231 (US)**

(72) Inventors:
• **STERN, Yonatan, Pesach
45203 Hod Hasharon (IL)**

• **SHTEINVIL, Emil
Kfar Saba 44201 (IL)**

(74) Representative: **Schmidt, Steffen J.
Wuesthoff & Wuesthoff,
Patent- und Rechtsanwälte,
Schweigerstrasse 2
81541 München (DE)**

(56) References cited:
**WO-A-99/50763**     **FR-A- 2 768 825**
**US-A- 5 265 242**

**Description**

FIELD OF THE INVENTION

The present invention relates to a system and a method for the automatic preparation and searching of scanned documents such as microfilm or paper, and in particular, to such a system and method in which the probability of errors occurring during the preparation of the scanned documents is incorporated into the searching process.

BACKGROUND OF THE INVENTION

As the Internet grows, many different types of Web sites are becoming connected and therefore are available to users. These Web sites may contain information which is of interest to users, such as news for example. Indeed, many Internet users today obtain at least a portion of their news information from Web sites which publish such information.

Traditional newspapers and other sources of news have therefore been forced to embrace the new media which is represented by Web pages. Currently, many traditional (print) newspapers have Web sites which contain at least a portion of the news and information which is available through the print version of the newspaper. However, managing such Web sites can be cumbersome, since currently there is no simple mechanism for converting data which is available as the printed newspaper into data which can be made available through the Web site.

The problem is particularly acute for publishing archived material, which is currently stored in microfilm. Newspaper publishers, libraries and other repositories have huge amounts of information which is stored on microfilm. Such microfilm documents represent a huge asset, which cannot currently be properly used. The advantage of microfilm is that it preserves the appearance of the newspaper or other paper document, as well as the data contained therein. The disadvantage, of course, is that searching through microfilm archives for the information of interest is tedious and difficult. Furthermore, microfilm can only be read at one physical location, since the data cannot be transmitted over a network, for example. Thus, microfilm has a number of significant problems.

Attempts to provide a solution unfortunately have a number of drawbacks. For example, scanning the microfilm documents in order to be able to provide the data through a computer results in a number of errors during the process of OCR (optical character recognition). This process is required for the textual data to be electronically searchable; however, the resultant errors cause the final text to be difficult to search accurately. Correcting these errors manually is a tedious and expensive process, yet currently if these errors are not corrected, the resultant text may not be searchable.

A further attempt to provide searches for text with errors is the "fuzzy search" process, in which a requested keyword and variations on that keyword are all searched simultaneously. Unfortunately, this search method is ineffective for large databases, since too many irrelevant hits are retrieved.

A more useful solution would preserve the desirable aspects of microfilm data, including the preservation of the appearance of the newspaper or other paper document, while converting this data into a digital form. This conversion process should be highly accurate, while enabling errors to either corrected or to be compensated in the process, particularly for the process of OCR (optical character recognition). The converted digital form would then be accessible through a network, such as the Internet for example, thereby enabling users to view the data from a remote location. Furthermore, such a solution should be easy to perform automatically, without requiring extensive manual intervention. Unfortunately such a solution is not currently available.

US Patent No. 5,265,242 teaches a document storage and retrieval system for storing a document body in the form of image, means for storing text information in the form of a character code string for retrieval, apparatus for executing a retrieval with reference to the text information, and apparatus for displaying a document image relating thereto on a retrieval terminal according to the retrieval result. Such a form of the system is available for retrieving the full contents of a document and also for displaying the document body printed in a format easy to read straight in the form of image. Users are capable of retrieving documents with arbitrary words and also capable of reading even such a document as is complicated to include mathematical expressions and charts through a terminal in the form of image, the same as on paper. A system is provided wherein the text information for retrieval is extracted automatically from the document image through character recognition. Since a precision of the character recognition has not been satisfactory hitherto, a visual retrieval and correction have been carried out without fail by operators. However, there is no necessity for the operators to attend therefor.

FR 2,768,825 is a document digitization and storage system that requires reduced operator involvement, and in particular allows for the documents to be stored in a format in which they can be interrogated.

WO 99 50763 teaches the processing of search requests in order to compensate for characters and character strings misread during OCR scanning. After an alphanumeric search is entered (50), the system determines variant words associated with the entered alphanumeric search request according to a predefined table of possible OCR errors, the OCR(s) error probability of occurrence and a predefined threshold of probability of occurrences (52). When the processing is complete, a search engine then uses the variant words to search a database containing OCR scanned documents (54).

SUMMARY OF THE INVENTION

The background does not teach or suggest a system and a method for converting microfilm data to a digital format automatically and accurately, such that errors in the process of OCR (optical character recognition) are considered at later stages in the process of publishing the microfilm data. The background art also does not teach or suggest a system and method for including the probability of occurrence for such errors in order to assist searches of the converted material. The background art also does not teach or suggest a system and method for enabling users to access the converted digital data through a network such as the Internet.

The present invention overcomes these deficiencies of the background art by providing a system and a method for converting microfilm data in a digital format for publishing through a network such as the Internet. First, an image is created of the microfilm, preferably in the TIFF format. Next, the words of the image are recognized through a process of OCR (optical character recognition), with an associated probability of error. The image data can then be converted into a digital format for publication, for example as XML data. Preferably, the user is able to perform a keyword search on the digital format data. More preferably, the keyword search is an adaptive search.

In order to facilitate the performance of such a search, the recognized words from the OCR process are indexed with the associated probability of error. Next, the user enters a keyword. The keyword is compared to the indexed words according to the probability of error. If the difference between the keyword and an indexed word is less than the probability of error, then the indexed word is considered to be a match for the keyword.

According to the present invention, there is provided a method for performing a search, the method comprising: performing OCR (optical character recognition) on an image to obtain at least one recognized word and a probabilistic degree of error for recognizing the recognized word; indexing the at least one recognized word with the probabilistic degree of error to form an indexed word; entering a search request, the search request including at least one keyword; and comparing the keyword to each indexed word according to the probabilistic degree of error, such that if a difference between the keyword and the indexed word is less than the probabilistic degree of error, the indexed word is considered to be a match for the keyword.

According to another embodiment of the present invention, there is provided a method for searching microfilm data in a digital format, the method comprising: creating a digital image of the microfilm data; performing OCR (optical character recognition) on the digital image to obtain at least one recognized word and a probability of error for recognizing the recognized word; indexing the at least one recognized word with the probability of error to form an indexed word; entering a search request, the search request including at least one keyword; and comparing the keyword to each indexed word according to the probability of error, such that if a difference between the keyword and the indexed word is less than the probability of error, the indexed word is considered to be a match for the keyword.

Hereinafter, the term "network" refers to a connection between any two or more computational devices which permits the transmission of data.

Hereinafter, the term "computational device" includes, but is not limited to, any type of computers operating according to any type of hardware and/or operating systems; or any device, including but not limited to: laptops, hand-held computers, PDA (personal data assistant) devices, cellular telephones, any type of WAP (wireless application protocol) enabled device, wearable computers of any sort, which has an operating system.

For the present invention, a software application could be written in substantially any suitable programming language, which could easily be selected by one of ordinary skill in the art. The programming language chosen should be compatible with the computational device according to which the software application is executed. Examples of suitable programming languages include, but are not limited to, C, C++ and Java.

In addition, the present invention could be implemented as software, firmware or hardware, or as a combination thereof For any of these implementations, the functional steps performed by the method could be described as a plurality of instructions performed by a data processor.

Hereinafter, the term "Web browser" refers to any software program which can display text, graphics, or both, from Web pages on World Wide Web sites. Hereinafter, the term "Web server" refers to a server capable of transmitting a Web page to the Web browser upon request.

Hereinafter, the term "Web page" refers to any document written in a mark-up language including, but not limited to, HTML (hypertext mark-up language) or VRML, (virtual reality modeling language), dynamic HTML, XML (extensible mark-up language) or XSL (XML styling language), or related computer languages thereof, as well as to any collection of such documents reachable through one specific Internet address or at one specific World Wide Web site, or any document obtainable through a particular URL (Uniform Resource Locator). Hereinafter, the term "Web site" refers to at least one Web page, and preferably a plurality of Web pages, virtually connected to form a coherent group.

Hereinafter, the phrase "display a Web page" includes all actions necessary to render at least a portion of the information on the Web page available to the computer user. As such, the phrase includes, but is not limited to, the static visual display of static graphical information, the audible production of audio information, the animated visual display of animation and the visual display of video stream data.

BRIEF DESCRIPTION OF THE DRAWINGS

The invention is herein described, by way of example only, with reference to the accompanying drawings, wherein:

FIG. 1 is a schematic block diagram of an exemplary system according to the present invention;
FIG. 2 is a flowchart of an illustrative method according to the present invention; and
FIG. 3 shows two exemplary screenshots for searching through a newspaper page, both according to the background art (Figure 3A) and according to the present invention (Figure 3B).

DESCRIPTION OF THE PREFERRED EMBODIMENTS

The present invention is of a system and a method for converting microfilm data in a digital format for publishing through a network such as the Internet. First, an image is created of the microfilm, preferably in the TIFF format. Next, the words of the image are recognized through a process of OCR (optical character recognition), with an associated probability of error. The image data can then be converted into a digital format for publication, for example as XML data. Preferably, the user is able to perform a keyword search on the digital format data. More preferably, the keyword search is an adaptive search. Optionally and more preferably, the search is performed through words that are labeled with XML tags, which most preferably are provided as the XML data. The XML tags most preferably indicate such information as the probability of error associated with each word.

In order to facilitate the performance of such a search, the recognized words from the OCR process are preferably indexed with the associated probability of error, for example through the previously described XML tags. Next, the user enters a keyword. The keyword is compared to the indexed words according to the probability of error. If the difference between the keyword and an indexed word is less than the probability of error, then the indexed word is considered to be a match for the keyword.

The principles and operation of the present invention may be better understood with reference to the drawings and the accompanying description.

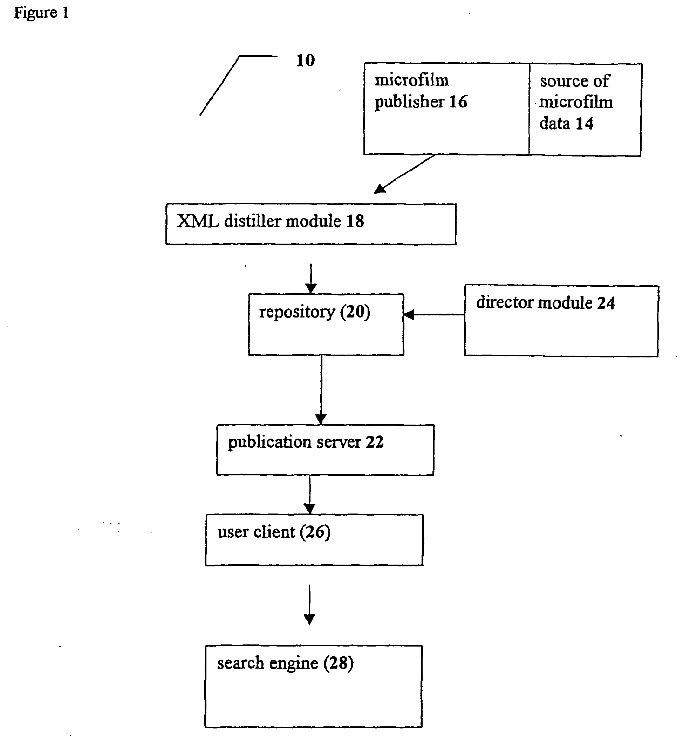

Referring now to the drawings, Figure 1 is a schematic block diagram of a system according to the present invention for automatically converting microfilm data to a digital format. Although the present invention is explained with regard to publishing newspaper data, it is understood that this is for the purposes of explanation only and is without any intention of being limiting.

As shown, a system **10** features a microfilm data source **14** which contains archived microfilm data. An associated microfilm publisher **16** according to the present invention converts the microfilm data into a digital format, by converting the microfilm data to digital images. Optionally and preferably, the digital format data is preprocessed by microfilm publisher **16** in order to clean the data, for example in order to improve image quality, crop the black adages and straighten the images. Preferably, the digital format data is in the TEF format.

Data which is in a digital format can then optionally and more preferably be converted to a basic internal format. The basic internal format can then more preferably be converted to a variety of different final formats for publication. Therefore, preferably the digital format data is only converted to a single format before publication in a variety of formats, in order to increase the efficiency of the conversion process.

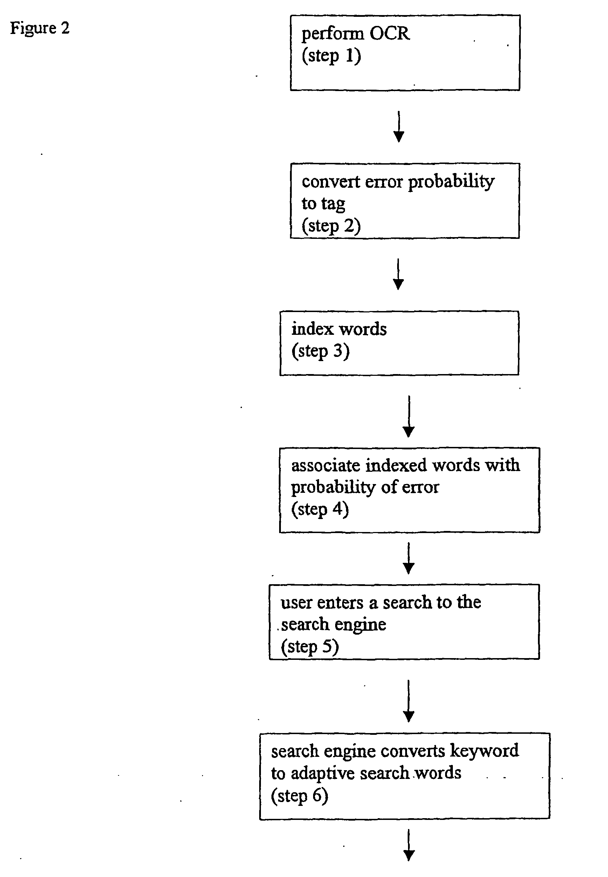

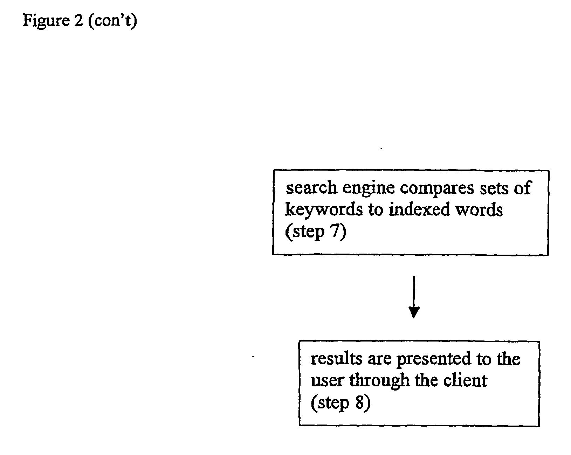

As shown, the internal format is optionally and preferably XML, although substantially any other type of mark-up language could also be used. The conversion process is preferably performed by an XML distiller module **18**. XML, distiller module **18** first performs optical character recognition (OCR) on the data in order to be able to recognize the text in the images. The recognition of text is important for enabling free text searching and indexing of the newspaper data. The process of performing OCR preferably includes the step of determining a probability of an error in the recognition of a word of the text, as described in greater detail below with regard to Figure 2.

Next, XML distiller module **18** preferably performs intelligent structure analysis, in order to be able to recognize and define the structures and objects contained in the newspaper data, particularly with regard to each page of the newspaper. Examples of such structures and objects include, but are not limited to, articles, advertisements, titles, and so forth. The process of intelligent structure analysis enables the newspaper data to be converted to a series of objects, for more efficient search and retrieval through the Internet or other network.

After the process of intelligent structure analysis has been completed, XML distiller module **18** preferably performs XML encoding of the object data. This process results in a set of enhanced, structured files which combine the original image of the data, preferably in the TIF format as previously described, with the text and XML information. Each such file thus preferably maintains the visual aspects of the newspaper layout, while enabling far greater functionality to be available through the Web page version of the newspaper.

Once the data is ready in the internal published format, the data is preferably stored in a repository **20** according to the present invention. Repository **20** is preferably a structured database, which contains the internal format data for publication in a final format. Optionally and more preferably, the internal format data is published in a plurality of different final formats by a publication server **22**. These different formats may optionally include, but are not limited to, any one or more of a mark-up language document such as a document in XML or HTML for example; a wireless-enabled document such as a WML document for example; the ASCII text format; and a format which is suitable for publication through a technology such as Web TV for example.

Optionally and more preferably, a director module **24** is able to manipulate the content of the data which is stored in repository **20,** for example by editing the data. In addition, director module **24** is preferably able to define style sheets and other layout information for the different formats which are published through publication server **22**. Thus, director module **24** most preferably enables the internal format data to be adjusted automatically for publication in each final publication format, in order to most advantageously display the data in each type of format.

A user client **26** can then be used to display the digital format data to the user, for example for the user to be able to read a page of the newspaper as a displayed image. The user can also enter a request for a search through user client **26,** including at least one keyword. The search request is then sent to a search engine **28,** which performs the adaptive search as described in greater detail below.

Figure 2 is a flowchart of an exemplary method according to the present invention for obtaining the probability of an error in the recognition of a word during OCR, and the use of this probability for performing an adaptive keyword search of the converted XML data.

In the first step, the process of OCR is performed on the image data, in order to recognize individual words of the text from the original newspaper. The process of OCR obtains three types of data: the ASCII text of the recognized words; coordinates for each character and hence for each word; and the probability of an error occurring in the recognition of each character. The process of OCR itself is well known in the art, and may optionally be performed with a commercially available software product (see for example FireReader™ of ABBYY, Russia, or TextBridge™ of Xerox Corp., USA). The probability of an error occurring in the recognition of each character is used to determine the probability of the overall error in the recognition of the word. In step 2, this probability is converted into a tag, which can be associated with the XML data for that word. More preferably, the error probability is converted to a degree of error according to the number of suspected erroneously identified characters, the probability of such an error, and the overall word length. Algorithms for the calculation of the degree of error may vary. For example, the average word error probability can optionally be calculated as

$$AverageErrorProbability=(\sum_{i}^{n} p_i)/n,$$

in which $p_i$ is the probability of the error for the $i^{th}$ character of the word, varying from 0 to 1; and $n$ is the number of characters in the word. The *AverageErrorProbability* can vary from 0 to 1, in which a zero value means that the word has no erroneous characters.

Assume that the *ErrorDegree* variable can have 4 fuzzy or categorical values: *NoError, SmallError, MiddleError, LargeError.* Then the following pseudo-code can be used to calculate the degree of error:

```
if(AverageErrorProbability=0)  FuzzyError= NoError; // good words

else if (n<= 3) ErrorDegree = LargeError; // short words with errors becomes LargeError

else if(n=4)  // calculate error probability for  fourth length words

{

        if(AverageErrorProbability<0.1) ErrorDegree= SmallError;

        else if(AverageErrorProbability<0.2) ErrorDegree= MiddleError;

        else ErrorDegree= LargeError;

}

else      // calculate error probability

{

        if(AverageErrorProbability<0.15) ErrorDegree= SmallError;

        else if(AverageErrorProbability<0.3) ErrorDegree= MiddleError;

        else ErrorDegree= LargeError;


}
```

Steps 1 and 2 rely on the OCR results to define the error probability. Optionally and more preferably, an internal OCR dictionary is used to test each word obtained from the OCR process which has been determined to be without error, or least to have an error below a certain probability. If this word is not found in this dictionary, then the error probability for that word is defined according to the number of suggested dictionary words and the word length, performed similarly to the process described above. This type of error, in which the OCR does not correctly assess the error probability for a particular word, has been found by the inventors of the present application to occur for at least part of the text after the OCR process. A further description of a preferred embodiment of this process is given below.

In step 3, the words obtained from the conversion of newspaper data are indexed by a search engine, in order for these words to be located during a keyword search. Preferably, all of the words are so indexed. In step 4, each indexed word is associated with the probability of the error in recognition which was previously obtained, preferably through the use of the XML tag. The conversion of the error probability to one of a limited set of values enables the adaptive search to more easily use the error information, as described in greater detail below.

In step 5, the user enters a search to the search engine for at least one keyword. In step 6, the search engine preferably converts each keyword into a set of adaptive search words, which are words differing from the keyword by at least one letter. In the following example, four such different sets are produced for the purposes of explanation only and without any intention of being limiting. These four sets are as follows: search only no error words without any fuzzy search (fuzzy range 0); search only small error words with fuzzy range1; search only middle error words with fuzzy range2; and search only large error words with fuzzy range3.

In step 7, these different sets of adaptive keywords are searched according to the probability of error. In step 8, the results are presented to the user through the client, as described with regard to Figure 1. Optionally, the recognized word is displayed on the image, but may also be displayed separately from the image. In either case, optionally and more preferably, the recognized word is displayed either as the text obtained from OCR, and/or alternatively as a portion of the image itself.

The advantage of the present invention is that it specifically ties the "fuzziness" of the search to the amount of error which occurs during the OCR process. Other fuzzy search methods which are known in the background art have the drawback of obtaining too many unrelated results, as these methods simply accept any indexed word which differs from the keyword by up to a certain number of letters, even if the process of OCR was performed accurately for that indexed word. By contrast, the present invention would only accept such an indexed word if the degree of difference from the keyword falls within the probability of an error during the OCR process. Thus, only relevant search results are obtained and presented to the user.

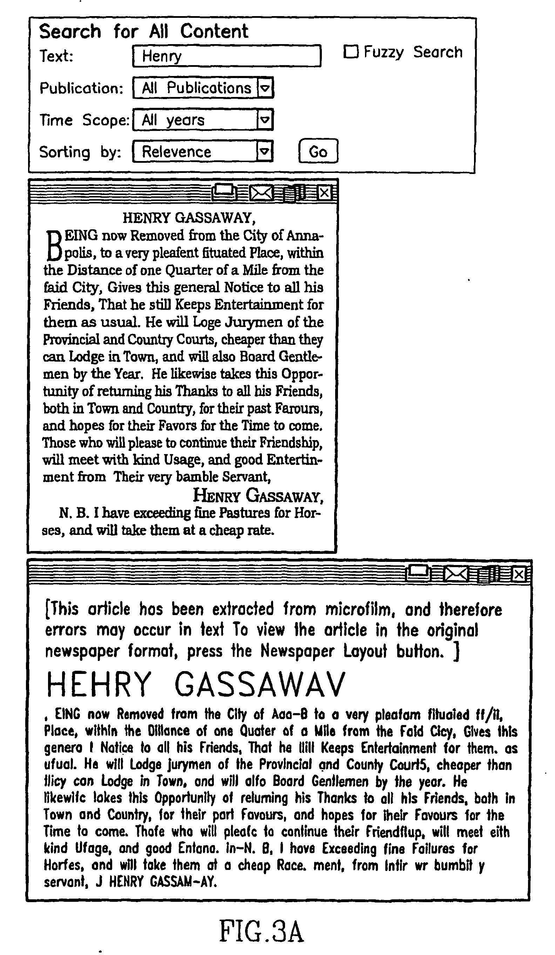

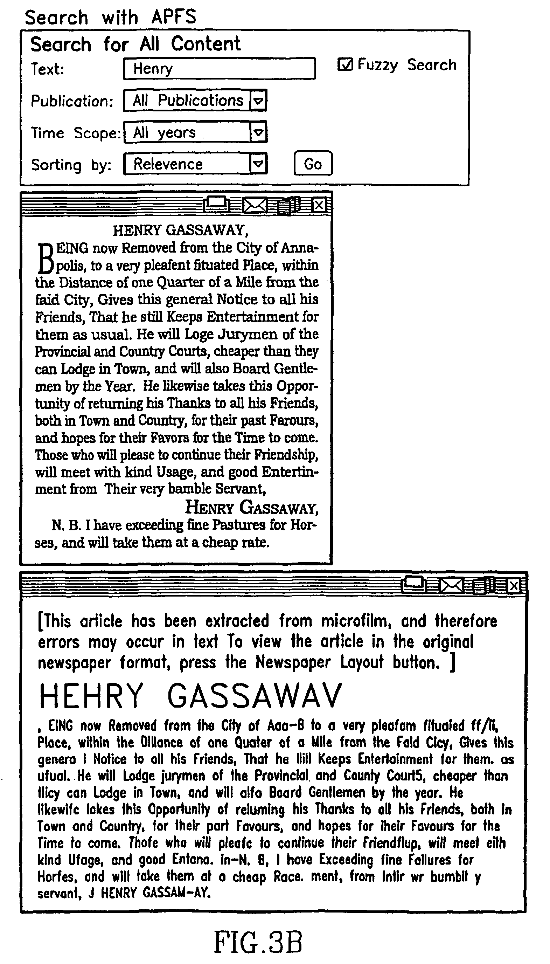

Figure 3A shows exemplary screenshots of background art software, without the advancing searching facility of the present invention. Figure 3B shows exemplary screenshots of the software of the present invention. Briefly, Figure 3A shows that the background art software cannot handle mistakes or errors in the scanned document, since errors such as misspelling "Henry" as "Hehry" can prevent the software from locating the desired search word "Henry". By contrast, in Figure 3B, the software of the present invention is able to locate the word "Henry" even when misspelled as "Hehry", as shown by the underlined located search words.

The previously described method for determining the probability of error for words derived from the OCR process is optionally and preferably implemented for the Verity search engine, Verity Inc, USA.

Words which are considered to be "suspicious", or to have a probability of error after the OCR process, may have at least one, but typically both of the following features: the OCR process detected at least one suspicious character within this word; and/or the word cannot be found in the dictionary. For both the previously described implementations of the present invention and the current implementation, the OCR dictionary may optionally be implemented as a look-up table, hash table or any suitable implementation.

These suspicious words are preferably labeled with special tags in the XML output as previously described. Unfortunately, the search engine of Verity cannot handle many error tags, for example more than a few hundred for one document, while searching. In order to overcome this limitation, preferably a special letter is placed before such a suspicious word to indicate that this word is suspicious. For example, the underscore could be used for this purpose, such as "_proteit" for "protect".

The <typo> command of the Verity search engine may optionally be used to search through all words, but more preferably is only used to search through these previously labeled, suspicious words for greater accuracy. This command enables words to be located which differs by one or two characters from the word being searched.

Word searches may optionally be used to search for either the precise word or a related grammar form, such as a verb tense for example, through the Verity search engine. However, this search engine does not support searches for related grammar forms for suspicious words. Therefore, the method of the present invention optionally also includes the production of related grammar forms for these suspicious words.

A search may also optionally be performed by combining searches through regular (non-suspicious) words and <typo> command searches through suspicious words. For example, for the word "president", the search request would be constructed as follows: <TYPO>_president <OR> <STEM> president.

This search would locate such words as president, presidential, presidents etc within "normal" words and words like prosident among suspicious words. Note that the presence of the underscore before the word '_president' in the search expression preferably prevents the Verity search engine from using the <typo> command to search within "normal" words.

The <STEM> operator may also optionally be added when searching through these words. The <Stem> operator supports searching according to different grammatical forms of the searched word according to the language of the search. For example, searching for "<STEM>accident" in the English language would return words such as 'accidental', 'acidents', 'accidentally' and so forth, together with the origin word 'accident'. These commands may optionally be combined with modifiers and/or the wildcard operator. For example, the <STEM> operator may optionally be combined with the <CASE> command, which supports searching for words written in different cases. For example, each of the words Accident, ACCIDENT, accident would all be found with the command "search <CASE>accident". Similarly, the <TYPO> operator may optionally be combined with the <CASE> command if <CASE> is placed first in the operand.

In addition, the user may wish to combine multiple search commands in the search expression with <AND> <OR>, and proximity operators <NEAR> <NEAR/N>, <PARAGRAPH>, <PHRASE>, <SENTENCE>. The present invention optionally and preferably enables these commands to be used for suspicious words alone and/or for regular and suspicious words together in a single search, such that the user most preferably does not need to specify a type of words for searching. Examples of preferred transformations for these search expressions are given in the table below.

| Source expression | Result expression for Fuzzy- 1 level of APFS | Comment |
| --- | --- | --- |
| Protect <near> need | (<TYPO/1>_protect <OR> <STEM> protect) <NEAR> (<TYPO/1>_need <OR> <STEM> need) | Original document contains words 'protection' and 'needed' Analogue search expression may be build for <NEAR/N>, <PARAGRAPH>, <PHRASE>, <SENTENCE> operators |
| Protect , need | (<TYPO/1>_protect <OR> <STEM> protect), (<TYPO/1> _need <OR> <STEM> need) | |

Table continued

| Source expression | Result expression for Fuzzy- 1 level of APFS | Comment |
|---|---|---|
| Prot* <AND> need | (PROT*) <AND> (<TYPO/1>_need <OR> <STEM> need) | Typo works together with wildcard |
| favor <AND> <CASE> Carlisl | (<TYPO/ 1>_favor <OR> <STEM> favor) <AND> (<CASF><TYPO/1>_Carlisl <OR> <CASE><STEM>Carlisl) | Original values in document : 'Favor' and 'Carlisle' Put <CASE > before <STEM > in operand |

While the invention has been described with respect to a limited number of embodiments, it will be appreciated that many variations, modifications and other applications of the invention may be made.

**Claims**

1.  A method for performing a search, the method comprising:

    performing OCR (optical character recognition) on an image to obtain at least one recognized word and a probabilistic degree of error for recognizing said recognized word, said probabilistic degree of error being indicative of an estimate of the possible number of erroneous characters in the indexed word;
    indexing said at least one recognized word with said probabilistic degree of error to form an indexed word;
    entering a search request, said search request including at least one keyword; and
    comparing said keyword to each indexed word according to said probabilistic degree of error, such that if a degree of difference between said keyword and said indexed word is less than said probabilistic degree of error, said indexed word is considered to be a match for said keyword.

2.  The method of claim 1, wherein indexing said at least one recognized word includes converting said probabilistic degree of error to a degree of error, said degree of error being selected from a limited set of values, such that said degree of error is compared to said difference when comparing said keyword to each indexed word according to said probabilistic degree of error.

3.  The method of claim 2, wherein said comparing said keyword to each indexed word according to said probabilistic degree of error further comprises:

    searching said indexed words according to said degree of error.

4.  The method of claim 3, wherein said degree of error is calculated at least partially according to a number of suspected erroneously identified characters and a probability of an error resulting thereof.

5.  The method of claim 4, wherein said degree of error is also calculated according to a length of said recognized word.

6.  The method of claim 5, wherein said degree of error is converted to one of a plurality of categorical values.

7.  The method of claim 6, wherein said searching said indexed words according to said degree of error comprises searching each indexed word according to said categorical value for said degree of error.

8.  The method of any of claims 1-7, wherein said probabilistic degree of error is at least partially determined by comparing said recognized word to a dictionary, such that said probabilistic degree of error is at least adjusted according to whether said recognized word is found in said dictionary.

9.  The method of claim 8, wherein if said recognized word is not found in said dictionary, said probabilistic degree of error is at least partially calculated according to a number of similar words identified in said dictionary.

10. The method of any of claims 1-9, wherein said OCR also produces coordinates for said recognized word in said image.

11. The method of claim 10, further comprising:

   displaying said recognized word in said image according to said coordinates.

12. The method of claim 10, further comprising:

   displaying said recognized word separately from said image.

13. The method of claim 11 or 12, wherein said recognized word is displayed according to said OCR.

14. The method of any of daims 1-13, wherein only said recognized word is displayed as a portion of said image.

15. The method of any of claims 1-14, wherein each indexed word is labeled with an XML tag for indicating said probabilistic degree of error.

16. The method of claim 1, wherein said performing OCR is preceded by creating a digital image of the microfilm data.

17. The method of claim 16, wherein the microfilm data is from a newspaper.

18. The method of claim 1, wherein said entering a search request comprises
   entering a search request including a plurality of keywords, said plurality of keywords having a relationship; and comparing said plurality of keywords to a plurality of indexed words according to said probabilistic degree of error and according to said relationship, such that if a degree of difference between said keywords and said indexed words is less than said probabilistic degree of error and such that if said plurality of indexed words matches said relationship, said indexed words are considered to be a match for said keywords.

19. The method of claim 18, wherein said relationship is determined according to at least one Boolean operator.

20. The method of claim 18, wherein said relationship is determined according to an exact phrase.

21. The method of claim 1, wherein said probabilistic degree of error is at least partially determined by comparing said recognized word to a dictionary, such that said probabilistic degree of error is at least adjusted according to whether said recognized word is found in said dictionary.

**Patentansprüche**

1. Verfahren zum Durchführen einer Suche, wobei das Verfahren umfasst:

   das Durchführen einer optischen Zeichenerkennung (OCR - Optical Character Recognition) an einem Bild, um wenigstens ein erkanntes Wort und einen probabilistischen Fehlergrad für die Erkennung des erkannten Wortes zu erhalten, wobei der probabilistische Fehlergrad eine Schätzung der möglichen Anzahl an fehlerhaften Zeichen in dem indizierten Wort angibt,
   das Indizieren des wenigstens einen erkannten Wortes mit dem probabilistischen Fehlergrad, um ein indiziertes Wort zu bilden,
   das Eingeben einer Suchanfrage, wobei die Suchanfrage wenigstens ein Schlüsselwort enthält, und
   das Vergleichen des Schlüsselwortes mit jedem indizierten Wort gemäß dem probabilistischen Fehlergrad, so dass, wenn ein Differenzgrad zwischen dem Schlüsselwort und dem indizierten Wort geringer als der probabilistische Fehlergrad ist, das indizierte Wort als mit dem Schlüsselwort übereinstimmend angesehen wird.

2. Verfahren nach Anspruch 1,
   wobei das Indizieren des wenigstens einen erkannten Worts das Umwandeln des probabilistischen Fehlergrades in einen Fehlergrad umfasst, wobei der Fehlergrad aus einem begrenzten Wertesatz ausgewählt wird, so dass der Fehlergrad beim Vergleichen des Schlüsselworts mit jedem indizierten Wort gemäß dem probabilistischen Fehlergrad mit der Differenz verglichen wird.

3. Verfahren nach Anspruch 2,
   wobei das Vergleichen des Schlüsselwortes mit jedem indizierten Wort gemäß dem probabilistischen Fehlergrad ferner umfasst:

das Suchen des indizierten Wortes gemäß dem Fehlergrad.

**4.** Verfahren nach Anspruch 3,
wobei der Fehlergrad wenigstens zum Teil gemäß einer Anzahl vermutlich falsch identifizierter Zeichen und der Wahrscheinlichkeit eines daraus resultierenden Fehlers berechnet wird.

**5.** Verfahren nach Anspruch 4,
wobei der Fehlergrad auch gemäß der Länge des erkannten Wortes berechnet wird.

**6.** Verfahren nach Anspruch 5,
wobei der Fehlergrad in einen von mehreren kategorischen Werten umgewandelt wird.

**7.** Verfahren nach Anspruch 6,
wobei das Suchen der indizierten Worte gemäß dem Fehlergrad das Suchen eines jeden indizierten Wortes gemäß dem kategorischen Wert des Fehlergrads umfasst.

**8.** Verfahren nach einem der Ansprüche 1 - 7,
wobei der probabilistische Fehlergrad wenigstens zum Teil durch Vergleichen des erkannten Worts mit einem Wörterbuch bestimmt wird, so dass der probabilistische Fehlergrad wenigstens danach festgelegt wird, ob sich das erkannte Wort in dem Wörterbuch findet.

**9.** Verfahren nach Anspruch 8,
wobei, wenn sich das erkannte Wort nicht in dem Wörterbuch findet, der probabilistische Fehlergrad wenigstens zum Teil gemäß mehreren ähnlichen Worten berechnet wird, die in dem Wörterbuch ermittelt wurden.

**10.** Verfahren nach einem der Ansprüche 1-9,
wobei die OCR außerdem Koordinaten für das erkannte Wort im Bild erzeugt.

**11.** Verfahren nach Anspruch 10,
das ferner umfasst:

das Anzeigen des erkannten Wortes in dem Bild gemäß den Koordinaten.

**12.** Verfahren nach Anspruch 10,
das ferner umfasst:

das Anzeigen des erkannten Wortes separat vom Bild.

**13.** Verfahren nach Anspruch 11 oder 12,
wobei das erkannte Wort gemäß der OCR angezeigt wird.

**14.** Verfahren nach einem der Ansprüche 1 - 13,
wobei nur das erkannte Wort als Teil des Bildes angezeigt wird.

**15.** Verfahren nach einem der Ansprüche 1 - 14,
wobei jedes indizierte Wort mit einem XML-Tag zur Angabe des probabilistischen Fehlergrades versehen wird.

**16.** Verfahren nach Anspruch 1,
wobei dem Durchführen der OCR das Erzeugen eines digitalen Bildes der Mikrofilmdaten vorausgeht.

**17.** Verfahren nach Anspruch 16,
wobei die Mikrofilmdaten aus einer Zeitung stammen.

**18.** Verfahren nach Anspruch 1,
wobei das Eingeben einer Suchanfrage umfasst:

das Eingeben einer Suchanfrage, die mehrere Schlüsselworte umfasst, wobei die mehreren Schlüsselworte zueinander in einem Verhältnis stehen, und

das Vergleichen der mehreren Schlüsselworte mit mehreren indizierten Worten gemäß dem probabilistischen Fehlergrad und gemäß dem Verhältnis, so dass, wenn ein Differenzgrad zwischen den Schlüsselworten und den indizierten Worten geringer als der probabilistische Fehlergrad ist und die mehreren indizierten Worte mit dem Verhältnis übereinstimmen, die indizierten Worte als mit den Schlüsselworten übereinstimmend angesehen werden.

**19.** Verfahren nach Anspruch 18,
wobei das Verhältnis gemäß wenigstens einem booleschen Operator bestimmt wird.

**20.** Verfahren nach Anspruch 18,
wobei das Verhältnis gemäß einer präzisen Redewendung oder einem feststehenden Ausdruck bestimmt wird.

**21.** Verfahren nach Anspruch 1,
wobei der probabilistische Fehlergrad wenigstens zum Teil durch Vergleichen des erkannten Wortes mit einem Wörterbuch bestimmt wird, so dass der probabilistische Fehlergrad wenigstens danach festgelegt wird, ob sich das erkannte Wort in dem Wörterbuch findet.

**Revendications**

1. Procédé pour effectuer une recherche, le procédé comprenant :

l'exécution d'une OCR (reconnaissance optique de caractères) sur une image pour obtenir au moins un mot reconnu et un degré d'erreur probabiliste pour reconnaître ledit mot reconnu, ledit degré d'erreur probabiliste indiquant une estimation du nombre possible de caractères erronés dans le mot indexé ;
l'indexation dudit au moins un mot reconnu avec ledit degré d'erreur probabiliste pour former un mot indexé ;
l'entrée d'une requête de recherche, ladite requête de recherche incluant au moins un mot-clé ; et
la comparaison dudit mot-clé avec chaque mot indexé en fonction dudit degré d'erreur probabiliste, de telle sorte que si un degré de différence entre ledit mot-clé et ledit mot indexé est inférieur audit degré d'erreur probabiliste, ledit mot indexé soit considéré comme étant une correspondance pour ledit mot-clé.

2. Procédé selon la revendication 1, dans lequel l'indexation dudit au moins un mot reconnu inclut la conversion dudit degré d'erreur probabiliste en un degré d'erreur, ledit degré d'erreur étant sélectionné dans un ensemble limité de valeurs, de telle sorte que ledit degré d'erreur soit comparé à ladite différence lors de la comparaison dudit mot-clé avec chaque mot indexé en fonction dudit degré d'erreur probabiliste.

3. Procédé selon la revendication 2, dans lequel ladite comparaison dudit mot-clé avec chaque mot indexé en fonction dudit degré d'erreur probabiliste comprend en outre :

la recherche desdits mots indexés en fonction dudit degré d'erreur.

4. Procédé selon la revendication 3, dans lequel ledit degré d'erreur est calculé au moins partiellement en fonction d'un nombre de caractères suspectés être identifiés de manière erronée et d'une probabilité d'une erreur résultant de ceci.

5. Procédé selon la revendication 4, dans lequel ledit degré d'erreur est également calculé en fonction d'une longueur dudit mot reconnu.

6. Procédé selon la revendication 5, dans lequel ledit degré d'erreur est converti en une parmi une pluralité de valeurs catégoriques.

7. Procédé selon la revendication 6, dans lequel ladite recherche desdits mots indexés en fonction dudit degré d'erreur comprend la recherche de chaque mot indexé en fonction de ladite valeur catégorique pour chaque degré d'erreur.

8. Procédé selon l'une quelconque des revendications 1 à 7, dans lequel ledit degré d'erreur probabiliste est au moins partiellement déterminé en comparant ledit mot reconnu à un dictionnaire, de telle sorte que ledit degré d'erreur probabiliste soit au moins ajusté selon que ledit mot reconnu est trouvé dans ledit dictionnaire ou non.

9. Procédé selon la revendication 8, dans lequel si ledit mot reconnu n'est pas trouvé dans ledit dictionnaire, ledit degré d'erreur probabiliste est au moins partiellement calculé en fonction d'un nombre de mots similaires identifiés dans ledit dictionnaire.

10. Procédé selon l'une quelconque des revendications 1 à 9, dans lequel ladite OCR produit également des coordonnées pour ledit mot reconnu dans ladite image.

11. Procédé selon la revendication 10, comprenant en outre :

 l'affichage dudit mot reconnu dans ladite image en fonction desdites coordonnées.

12. Procédé selon la revendication 10, comprenant en outre :

 l'affichage dudit mot reconnu séparément de ladite image.

13. Procédé selon la revendication 11 ou 12, dans lequel ledit mot reconnu est affiché en fonction de ladite OCR.

14. Procédé selon l'une quelconque des revendications 1 à 13, dans lequel seul ledit mot reconnu est affiché comme une partie de ladite image.

15. Procédé selon l'une quelconque des revendications 1 à 14, dans lequel chaque mot indexé est étiqueté avec un marqueur XML pour indiquer ledit degré d'erreur probabiliste.

16. Procédé selon la revendication 1, dans lequel ladite exécution de l'OCR est précédée par la création d'une image numérique des données de microfilms.

17. Procédé selon la revendication 16, dans lequel les données de microfilms proviennent d'un journal.

18. Procédé selon la revendication 1, dans lequel ladite entrée d'une requête de recherche comprend l'entrée d'une requête de recherche incluant une pluralité de mots-clés, ladite pluralité de mots-clés ayant une relation ; et
la comparaison de ladite pluralité de mots-clés à une pluralité de mots indexés en fonction dudit degré d'erreur probabiliste et en fonction de ladite relation, de telle sorte que si un degré de différence entre lesdits mots-clés et lesdits mots indexés est inférieur audit degré d'erreur probabiliste et de telle sorte que si ladite pluralité de mots indexés satisfait ladite relation, lesdits mots indexés soient considérés comme étant une correspondance pour lesdits mots-clés.

19. Procédé selon la revendication 18, dans lequel ladite relation est déterminée en fonction d'au moins un opérateur booléen.

20. Procédé selon la revendication 18, dans lequel ladite relation est déterminée en fonction d'une phrase exacte.

21. Procédé selon la revendication 1, dans lequel ledit degré d'erreur probabiliste est au moins partiellement déterminé en comparant ledit mot reconnu à un dictionnaire, de telle sorte que ledit degré d'erreur probabiliste soit au moins ajusté selon que ledit mot reconnu est trouvé dans ledit dictionnaire ou non.

Figure 1

```
                                    ┌──────────────────┬──────────────┐
                                    │ microfilm        │ source of    │
                        10          │ publisher 16     │ microfilm    │
                                    │                  │ data 14      │
                                    └──────────────────┴──────────────┘

          ┌────────────────────────────────┐
          │ XML distiller module 18        │
          └────────────────────────────────┘

                    ┌──────────────────┐          ┌────────────────────────┐
                    │ repository (20)   │◄─────────│ director module 24     │
                    └──────────────────┘          └────────────────────────┘

               ┌────────────────────────┐
               │ publication server 22   │
               └────────────────────────┘

               ┌────────────────────────┐
               │ user client (26)        │
               └────────────────────────┘

               ┌────────────────────────┐
               │ search engine (28)      │
               │                         │
               │                         │
               └────────────────────────┘
```

Figure 2

```
┌─────────────────────────────┐
│ perform OCR                 │
│ (step 1)                    │
└─────────────────────────────┘
              │
              ▼
┌─────────────────────────────┐
│ convert error probability   │
│ to tag                      │
│ (step 2)                    │
└─────────────────────────────┘
              │
              ▼
┌─────────────────────────────┐
│ index words                 │
│ (step 3)                    │
└─────────────────────────────┘
              │
              ▼
┌─────────────────────────────┐
│ associate indexed words with│
│ probability of error        │
│ (step 4)                    │
└─────────────────────────────┘
              │
              ▼
┌─────────────────────────────┐
│ user enters a search to the │
│ search engine               │
│ (step 5)                    │
└─────────────────────────────┘
              │
              ▼
┌─────────────────────────────┐
│ search engine converts keyword│
│ to adaptive search words    │
│ (step 6)                    │
└─────────────────────────────┘
              │
              ▼
```

Figure 2 (con't)

```
┌─────────────────────────────┐
│ search engine compares sets of │
│ keywords to indexed words      │
│ (step 7)                       │
└─────────────────────────────┘
              │
              ▼
┌─────────────────────────────┐
│ results are presented to the   │
│ user through the client        │
│ (step 8)                       │
└─────────────────────────────┘
```

## Search for All Content

Text: `Henry` ☐ Fuzzy Search

Publication: `All Publications` ▽

Time Scope: `All years` ▽

Sorting by: `Relevence` ▽ [ Go ]

---

▱ ✉ ▥ ✕

### HENRY GASSAWAY,

BEING now Removed from the City of Anna-polis, to a very pleafent fituated Place, within the Distance of one Quarter of a Mile from the faid City, Gives this general Notice to all his Friends, That he still Keeps Entertainment for them as usual. He will Loge Jurymen of the Provincial and Country Courts, cheaper than they can Lodge in Town, and will also Board Gentle-men by the Year. He likewise takes this Oppor-tunity of returning his Thanks to all his Friends, both in Town and Country, for their past Farours, and hopes for their Favors for the Time to come. Those who will please to continue their Friendship, will meet with kind Usage, and good Entertin-ment from Their very bamble Servant,

HENRY GASSAWAY,

N. B. I have exceeding fine Pastures for Hor-ses, and will take them at a cheap rate.

---

▱ ✉ ▥ ✕

[This article has been extracted from microfilm, and therefore errors may occur in text To view the article in the original newspaper format, press the Newspaper Layout button. ]

# HEHRY GASSAWAV

, EING now Removed from the City of Aaa-8 to a very pleafam fituoled ff/il, Place, within the Dillance of one Quoter of a Mile from the Fold Cicy, Gives this genera I Notice to all his Friends, That he lilll Keeps Entertainment for them. as ufual. He will Lodge jurymen of the Provincial and County Court5, cheaper than llicy can Lodge in Town, and will olfo Board Gentlemen by the year. He likewilc lokes this Opportunily of reluming his Thanks to all his Friends, both in Town and Country, for their port Favours, and hopes for their Favours for the Time to come. Thofe who will pleafc to continue their Friendflup, will meet eith kind Ufoge, and good Entiano. in—N. 8, I have Exceeding fine Foilures for Horfes, and will take them at a cheap Race. menl, from Intir wr bumbil y servonl, J HENRY GASSAM-AY.

## FIG.3A

Search with APFS

Search for All Content

Text: [ Henry ]  ☑ Fuzzy Search

Publication: [ All Publications ▽]

Time Scope: [ All years ▽]

Sorting by: [ Relevence ▽] [ Go ]

HENRY GASSAWAY,

BEING now Removed from the City of Anna-
polis, to a very pleafent fituated Place, within
the Distance of one Quarter of a Mile from the
faid City, Gives this general Notice to all his
Friends, That he still Keeps Entertainment for
them as usual. He will Loge Jurymen of the
Provincial and Country Courts, cheaper than they
can Lodge in Town, and will also Board Gentle-
men by the Year. He likewise takes this Oppor-
tunity of returning his Thanks to all his Friends,
both in Town and Country, for their past Farours,
and hopes for their Favors for the Time to come.
Those who will please to continue their Friendship,
will meet with kind Usage, and good Entertin-
ment from Their very bamble Servant,
HENRY GASSAWAY,
N. B. I have exceeding fine Pastures for Hor-
ses, and will take them at a cheap rate.

[This article has been extracted from microfilm, and therefore errors may occur in text To view the article in the original newspaper format, press the Newspaper Layout button. ]

# HEHRY GASSAWAV

, EING now Removed from the City of Aoo-B to a very pleafam fituoled ff/ſl, Place, within the Dillance of one Quoter of a Mile from the Fold Cicy, Gives this genera I Notice to all his Friends, That he Iliil Keeps Entertoinment for them. as ufual. He will Lodge jurymen of the Provinclal. and County Court5, cheaper than Ilicy can Lodge in Town, and will olfo Board Gentlemen by the year. He likewifc lakes this Opportunity of relurning his Thanks to all his Friends, both in Town and Country, for their pork Favours, and hopes for their Favours for the Time to come. Thofe who will pleafc to continue their Friendflup, will meet eith kind Ufage, and good Entona. In-N. 8, I hove Exceeding fine Failures for Horfes, and will take them at o cheap Race. ment, from Intir wr bumbil y servant, J HENRY GASSAM-AY.

FIG.3B